# EUROPEAN PATENT APPLICATION

(11) **EP 4 390 301 A1**
(43) Date of publication of application: **26.06.2024**
(21) Application number: 22872565.1
(22) Date of filing: 03.08.2022
(51) Int. Cl.: G01B 11/02, E02F 9/26

(54) **VEHICLE DETERMINATION SYSTEM**

(30) Priority: 24.09.2021 JP 2021155718
(71) Applicant: KOBELCO CONSTRUCTION MACHINERY CO., LTD., Hiroshima-shi, Hiroshima 731-5161 (JP)
(72) Inventor: FUJIWARA, Sho, Saeki-ku, Hiroshima-shi Hiroshima 731-5161 (JP); HOSO, Yukihiro, Saeki-ku, Hiroshima-shi Hiroshima 731-5161 (JP); KYU, Shingun, Saeki-ku, Hiroshima-shi Hiroshima 731-5161 (JP); NODA, Daisuke, Saeki-ku, Hiroshima-shi Hiroshima 731-5161 (JP); YAMASHITA, Koji, Saeki-ku, Hiroshima-shi Hiroshima 731-5161 (JP)
(74) Representative: TBK
(86) International application number: PCT/JP2022/029759
(87) International publication number: WO 2023/047809

(57) **Abstract**

A vehicle determination system (1) includes a loading platform detection unit (30) and a controller (50). The loading platform detection unit (30) detects information including a distance to a loading platform (13). The controller (50) calculates dimensional information about the loading platform (13) based on the distance detected by the loading platform detection unit (30). The controller (50) stores a correspondence between the dimensional information about the loading platform (13) and a type of a vehicle (10). The controller (50) determines the type of the vehicle (10) based on the calculated dimensional information and the stored correspondence.

## Description

### Technical Field

The present invention relates to a vehicle determination system that determines a type of a vehicle.

### Background Art

For example, Patent Literature 1 and the like describe a technique for determining a type of a vehicle (a model in Patent Literature 1). In the technique described in Patent Literature 1, a display unit is provided in a vehicle. The Patent Literature 1 describes that a blinking cycle of the display unit varies depending on types of vehicles, that the display unit has different colors depending on types of vehicles, and that an emission color of the display unit varies depending on types of vehicles.

In the technique described in the Patent Literature 1, it is necessary to provide a display unit (mark) for determining a type of a vehicle to the vehicle and to set the display unit in accordance with the type of the vehicle, resulting in much expense in time and effort.

### Citation List

### Patent Literature

Patent Literature 1: JP H11-210020 A

### Summary of Invention

Therefore, an object of the present invention is to provide a vehicle determination system capable of determining a type of a vehicle without providing a mark for determining the type of the vehicle to the vehicle.

The vehicle determination system determines a type of a vehicle having a loading platform. The vehicle determination system includes a loading platform detection unit and a controller. The loading platform detection unit detects information including a distance to the loading platform. The controller calculates dimensional information about the loading platform based on the distance detected by the loading platform detection unit. The controller stores correspondence between the dimensional information about the loading platform and the type of the vehicle. The controller determines the type of the vehicle based on the calculated dimensional information and the stored correspondence.

With the above configuration, the type of the vehicle can be determined without providing a mark for determining a type of a vehicle to the vehicle.

### Brief Description of Drawings

FIG. 1 is a side view of a vehicle of a vehicle determination system, a work machine, and the like.
FIG. 2 is a top view of the vehicle, the work machine, and the like illustrated in FIG. 1.
FIG. 3 is a diagram illustrating a loading platform and the like detected by a loading platform detection unit illustrated in FIG. 1.
FIG. 4 is a block diagram of the vehicle determination system illustrated in FIG. 1.
FIG. 5 is a flowchart illustrating processing of a controller illustrated in FIG. 4.

### Description of Embodiment

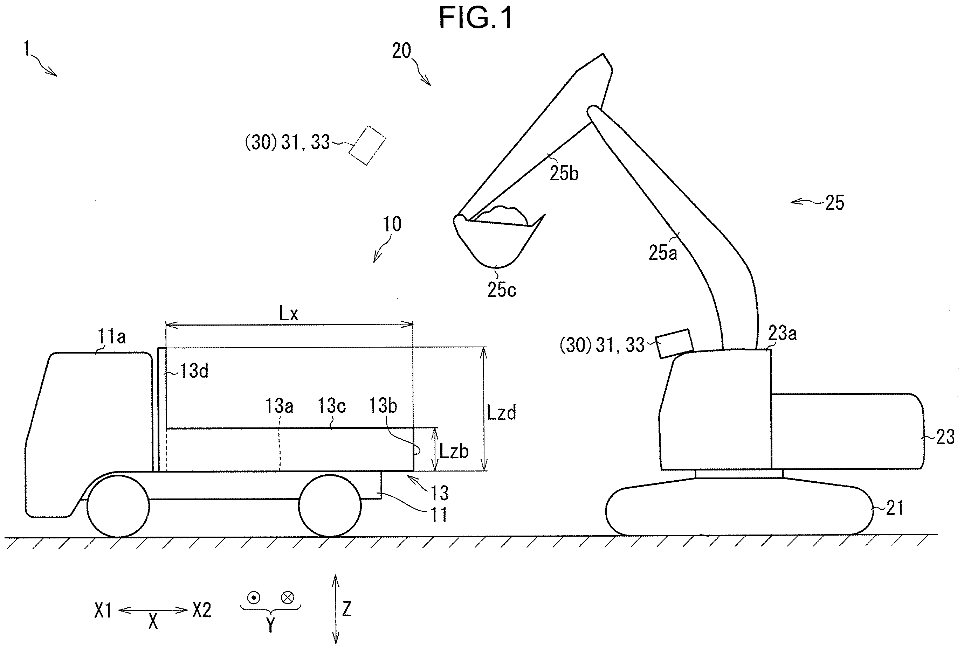

A vehicle determination system 1 will be described with reference to FIGS. 1 to 5.

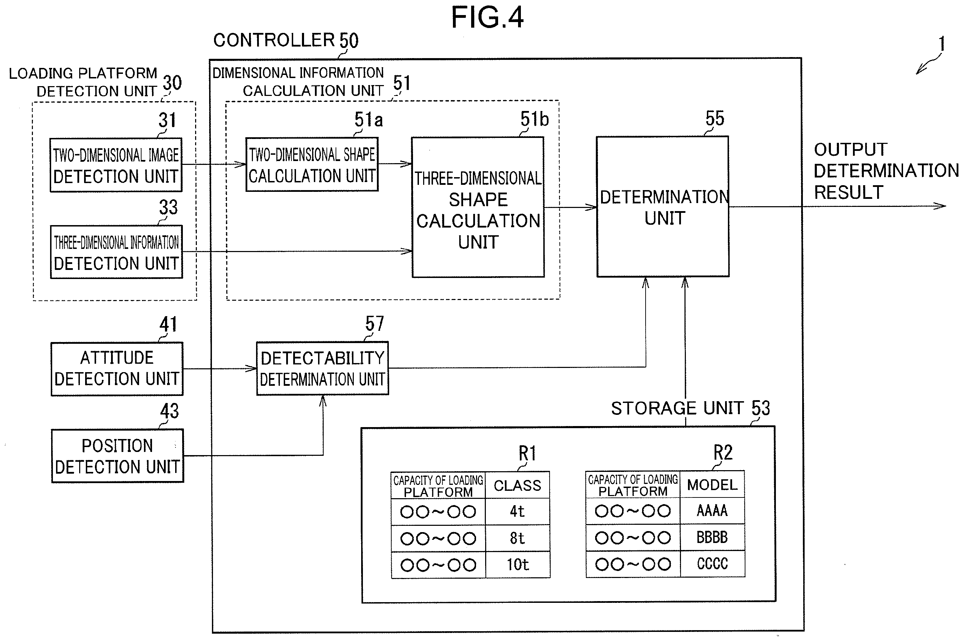

The vehicle determination system 1 is a system that determines a type of a vehicle 10 illustrated in FIG. 1. The vehicle determination system 1 includes the vehicle 10, a work machine 20, a loading platform detection unit 30 (loading platform detector), an attitude detection unit 41 (attitude detector) illustrated in FIG. 4, a position detection unit 43 (position detector), and a controller 50.

As illustrated in FIG. 1, the vehicle 10 includes a loading platform 13. The vehicle 10 is a machine (work machine, transport vehicle, or conveyance vehicle for performing transport work) that carries a conveyance object accommodated in the loading platform 13. The vehicle 10 is, for example, a dump truck or the like. The vehicle 10 includes a vehicle body 11 and the loading platform 13.

The vehicle body 11 supports the loading platform 13. The vehicle body 11 can travel, and may travel with wheels or crawlers. The vehicle body 11 includes a vehicle cab 11a.

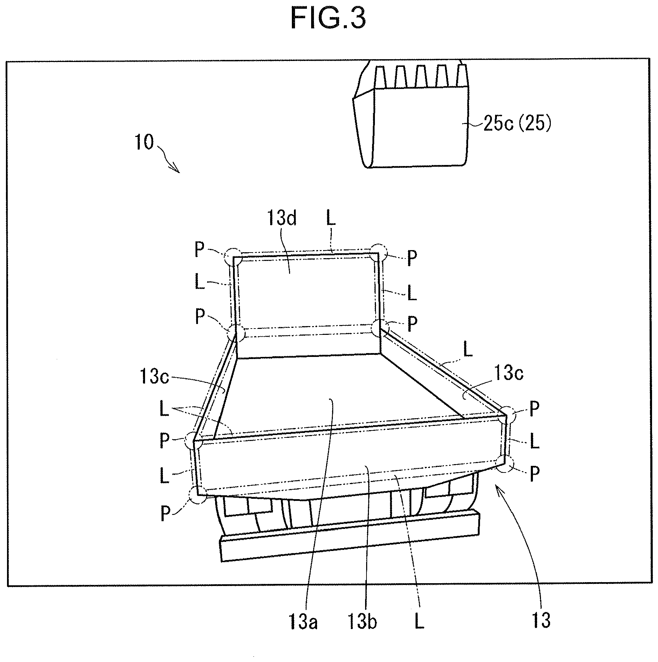

The loading platform 13 accommodates a conveyance object. The conveyance object stored in the loading platform 13 may be earth and sand, stone, wood, metal, waste, a structure such as concrete, or the like. The loading platform 13 is disposed at a position deviated from the vehicle cab 11a in a vehicle rear direction X2 (described later). The loading platform 13 has, for example, a box shape without a lid (see FIG. 3). The loading platform 13 may be movable with respect to the vehicle body 11 or may be fixed to the vehicle body 11. Hereinafter, a state where a floor surface 13a (described later) of the loading platform 13 is disposed horizontally or approximately horizontally will be described. The loading platform 13 includes the floor surface 13a, a tailgate surface 13b, side panel surfaces 13c, and a cab protector surface 13d.

### (Direction of Vehicle 10)

A direction related to the vehicle 10 and coinciding with a vertical direction in a case where the vehicle 10 is placed on a horizontal plane is defined as a vehicle vertical direction Z. A longitudinal direction of the loading platform 13 is defined as a vehicle front-rear direction X. In the vehicle front-rear direction X, a direction from the loading platform 13 toward the vehicle cab 11a is defined as a vehicle front direction X1, and the opposite direction is defined as a vehicle rear direction X2. A direction orthogonal to each of the vehicle vertical direction Z and the vehicle front-rear direction X is defined as a vehicle width direction Y.

The floor surface 13a is a bottom surface of the loading platform 13. The floor surface 13a is planar or approximately planar. Each of the tailgate surface 13b, the side panel surface 13c, and the cab protector surface 13d is also planar or approximately planar. The tailgate surface 13b is a surface located on a side of the loading platform 13 in the vehicle rear direction X2, and protrudes upward from an end portion of the floor surface 13a in the vehicle rear direction X2. The side panel surfaces 13c located on the left and right sides are outer surfaces (left surface and right surface) of the loading platform 13 in the vehicle width direction Y (see FIG. 3), and protrude upward from left and right end portions of the floor surface 13a. The cab protector surface 13d is a surface located on a side of the loading platform 13 in the vehicle front direction X1, and protrudes upward from an end portion of the floor surface 13a in the vehicle front direction X1. The cab protector surface 13d protrudes higher than the side panel surfaces 13c and protrudes higher than the tailgate surface 13b.

The work machine 20 performs work on the vehicle 10. The work machine 20 performs, for example, work of loading a conveyance object (earth and sand loading work or the like) on the loading platform 13. The work machine 20 is, for example, a construction machine, and may be, for example, an excavator or a crane. Hereinafter, a case where the work machine 20 is an excavator will be described. The work machine 20 includes a lower travelling body 21, an upper slewing body 23, and an attachment 25.

The lower travelling body 21 causes the work machine 20 to travel. The lower travelling body 21 includes, for example, a crawler.

The upper slewing body 23 is mounted on the lower travelling body 21 so as to be able to slew. The upper slewing body 23 includes a work machine cab 23a. The work machine cab 23a is a portion including an operation device or the like that enables an operator to operate the work machine 20. The work machine 20 may be operated by an operation of an operator or may be operated by automatic operation.

The attachment 25 which performs work, includes, for example, a boom 25a, an arm 25b, and a distal end attachment 25c. The boom 25a is mounted on the upper slewing body 23 so as to be able to be raised and lowered (rotate in an up-down direction). The arm 25b is rotatably mounted to the boom 25a. The distal end attachment 25c is located at a distal end of the attachment 25 and is rotatably attached to the arm 25b. The distal end attachment 25c may be a bucket that scoops, for example, earth and sand, a device (a grapple or the like) that pinches an object, or a device (a breaker or the like) that crushes or excavates an object.

The loading platform detection unit 30 (distance acquisition unit) detects information including a distance to the loading platform 13, specifically, for example, information including a distance from the loading platform detection unit 30 to the loading platform 13. The loading platform detection unit 30 may be a detector including a sensor for detecting the information including the distance to the loading platform 13. The loading platform detection unit 30 is disposed at a position where the loading platform 13 can be detected. For example, the loading platform detection unit 30 may be attached to the work machine 20. For example, the loading platform detection unit 30 may be attached to the work machine cab 23a. In this case, the loading platform detection unit 30 may be attached to a roof portion of the work machine cab 23a or may be disposed inside the work machine cab 23a. The loading platform detection unit 30 may be attached to a portion other than the work machine cab 23a in the work machine 20.

The loading platform detection unit 30 may be disposed outside the work machine 20 (see the loading platform detection unit 30 indicated by a chain double-dashed line in FIG. 1). For example, the loading platform detection unit 30 may be installed at a work site where the work machine 20 is disposed (a work site where the vehicle 10 is disposed). Similarly to the loading platform detection unit 30, each of the position detection unit 43 and the controller 50 may be mounted on the work machine 20 or may be disposed outside the work machine 20. The loading platform detection unit 30 may be provided at only one place or may be provided at a plurality of places (the same applies to the position detection unit 43 and the controller 50.). For example, the vehicle determination system 1 may include the loading platform detection unit 30 mounted on the work machine 20 and the loading platform detection unit 30 disposed outside the work machine 20. The same applies to the position detection unit 43 and the controller 50.

The loading platform detection unit 30 may detect a distance to a part of the loading platform 13. Specifically, for example, the loading platform detection unit 30 may detect the distance to the cab protector surface 13d or may detect the distance to the tailgate surface 13b. The loading platform detection unit 30 may detect a distance image (described later) of the entire or approximately entire part of the loading platform 13. The loading platform detection unit 30 may detect information other than the distance, and specifically, may detect a two-dimensional image of the loading platform 13. For example, the loading platform detection unit 30 may include a two-dimensional image detection unit 31 and a three-dimensional information detection unit 33.

The two-dimensional image detection unit 31 detects a two-dimensional image of the loading platform 13. The two-dimensional image detection unit 31 may be a detector including a sensor for detecting a two-dimensional image of the loading platform 13. A two-dimensional image detected by the two-dimensional image detection unit 31 may include the entire part of the loading platform 13, for example, as illustrated in FIG. 3. A distance image acquired by the three-dimensional information detection unit 33 to be described later may similarly include the entire part of the loading platform 13. The two-dimensional image may include a portion of the vehicle 10 other than the loading platform 13, and may include the work machine 20 (for example, the attachment 25). The distance image acquired by the three-dimensional information detection unit 33 may similarly include a portion of the vehicle 10 other than the loading platform 13, and may include the work machine 20 (for example, the attachment 25). The two-dimensional image detection unit 31 illustrated in FIG. 1 may be specifically a monocular camera.

The three-dimensional information detection unit 33 detects three-dimensional information (three-dimensional distance information) including the loading platform 13. The three-dimensional information detection unit 33 may be a detector including a sensor for detecting three-dimensional information (three-dimensional distance information) including the loading platform 13. The three-dimensional information detection unit 33 acquires a distance image that is an image having distance information (depth information). Specifically, for example, the three-dimensional information detection unit 33 detects point cloud data and the like. The three-dimensional information detection unit 33 may include a device that detects three-dimensional information with laser light, and may include, for example, a light detection and ranging (LIDAR), or, for example, a time of flight (TOF) sensor. The three-dimensional information detection unit 33 may include a device (for example, a millimeter wave radar) that detects three-dimensional information by using radio waves. The three-dimensional information detection unit 33 may include a stereo camera. The coordinate system of the two-dimensional image and the coordinate system of the three-dimensional information are preferably unified. For example, these coordinate systems may be unified to a coordinate system (machine coordinate system) based on the work machine 20, or may be unified to a coordinate system based on the work site.

Note that the loading platform detection unit 30 may include a device that detects one-dimensional or two-dimensional distance information. More specifically, the loading platform detection unit 30 may include a device (a device that detects one-dimensional distance information) that detects a distance from the loading platform detection unit 30 to a certain point. The loading platform detection unit 30 may include a device (a device that detects two-dimensional distance information) that detects a distance to each point where a plane passing through the loading platform detection unit 30 intersects the loading platform 13. For example, the loading platform detection unit 30 may include an optical sensor (for example, a laser sensor), a radio wave sensor, or the like that detects one-dimensional or two-dimensional distance information.

The attitude detection unit 41 (see FIG. 4) detects an attitude of the work machine 20. The attitude detection unit 41 may be a detector including a sensor for detecting the attitude of the work machine 20. The attitude detection unit 41 detects a rotation angle (raising-and-lowering angle) of the boom 25a with respect to the upper slewing body 23. The attitude detection unit 41 detects a rotation angle of the arm 25b with respect to boom 25a. The attitude detection unit 41 may detect a rotation angle of the distal end attachment 25c with respect to the arm 25b. The attitude detection unit 41 detects the slewing angle of the upper slewing body 23 with respect to the lower travelling body 21. The attitude detection unit 41 may include a sensor (for example, a rotary encoder) that detects an angle, a sensor that detects an inclination with respect to a horizontal plane, or a sensor that detects a stroke of a cylinder (not illustrated) that drives the attachment 25. The attitude detection unit 41 may detect the attitude of the work machine 20 based on one of or both of a two-dimensional image and a distance image. In this case, one or both of the two-dimensional image and the distance image may be detected by the loading platform detection unit 30. In this case, the loading platform detection unit 30 also has the function of the attitude detection unit 41, and the attitude detection unit 41 may be omitted.

The position detection unit 43 (see FIG. 4) detects the position of the work machine 20 at the work site. The position detection unit 43 may detect the position and orientation of the work machine 20 with respect to the work site (for example, the orientation of the upper slewing body 23). The position detection unit 43 may detect a position and orientation of a reference portion of the work machine 20 with respect to the work site. The reference portion of the work machine 20 may be, for example, a specific portion of the upper slewing body 23 or the lower travelling body 21, or may be, for example, an attachment portion (boom foot) of the boom 25a to the upper slewing body 23.

The position detection unit 43 may be a detector including a sensor for detecting the position of the work machine 20 at the work site. Specifically, for example, the position detection unit 43 may use a satellite positioning system (for example, a global navigation satellite system (GNSS)), may use a total station, or may use another publicly known technique capable of detecting the position of the work machine 20 at the work site.

The controller 50 (see FIG. 4) is a computer that inputs and outputs signals, performs calculation (processing), stores information, and the like. For example, the function of the controller 50 illustrated in FIG. 4 is implemented by a calculation unit executing a program stored in a storage unit 53 or the like of the controller 50. The controller 50 performs processing related to determination of the type of the vehicle 10 (see FIG. 1). The controller 50 may perform processing different from the determination of the type of the vehicle 10. For example, the controller 50 may control an automatic operation of the work machine 20 (see FIG. 1) or may control assistance of the operation of the work machine 20. The controller 50 includes a dimensional information calculation unit 51, a storage unit 53, a determination unit 55, and a detectability determination unit 57.

The dimensional information calculation unit 51 calculates dimensional information about the loading platform 13 based on the distance detected by the loading platform detection unit 30 illustrated in FIG. 1. The dimensional information is information serving as a reference for determining the type of the vehicle 10. Information that enables a determination of the type of the vehicle 10 is used as the dimensional information. Specific examples of the dimensional information are as follows.

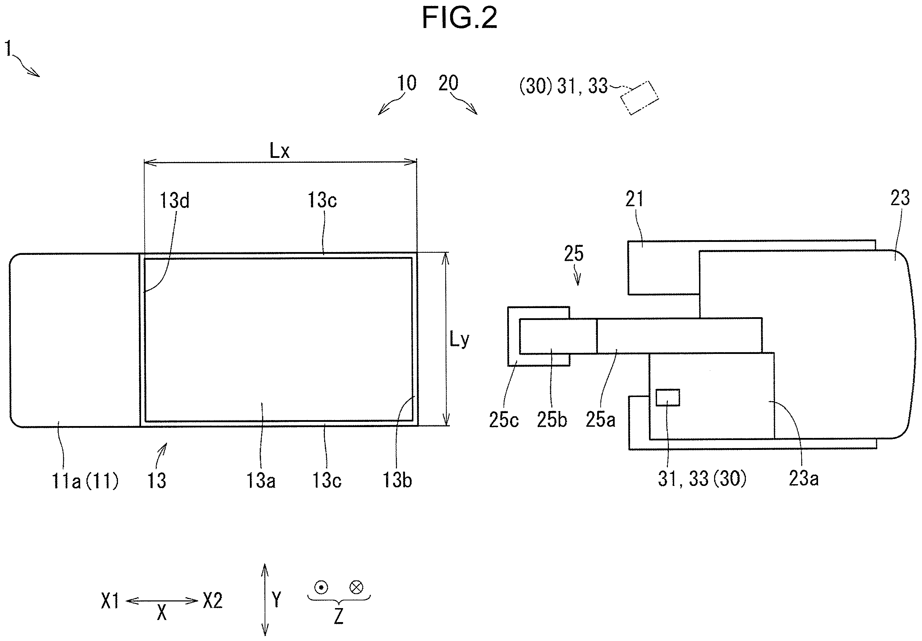

[Example A1] The dimensional information may include a dimension of the loading platform 13 in a specific direction or a dimension of a specific portion of the loading platform 13. [Example A1a] The dimensional information may include a dimension Lx of the loading platform 13 in the vehicle front-rear direction X (dimension and depth of the loading platform 13 in a longitudinal direction of the loading platform 13). For example, the dimension Lx is an interval between the cab protector surface 13d and the tailgate surface 13b in the vehicle front-rear direction X. [Example A1b] The dimensional information may include a dimension Ly (width) of the loading platform 13 illustrated in FIG. 2 in the vehicle width direction Y. For example, the dimension Ly may be an interval in the vehicle width direction Y between the side panel surfaces 13c, 13c on both sides in the vehicle width direction Y. For example, the dimension Ly may be a dimension of the tailgate surface 13b or the cab protector surface 13d in the vehicle width direction Y. [Example A1c] The dimensional information may include a dimension of the loading platform 13 in the vehicle vertical direction Z. For example, the dimensional information may include a dimension Lzb (height) of the tailgate surface 13b (or the side panel surfaces 13c) illustrated in FIG. 1 in the vehicle vertical direction Z. For example, the dimensional information may include a dimension Lzd (height) of the cab protector surface 13d in the vehicle vertical direction Z.

[Example A2] The dimensional information may include the entire dimensions (in the respective directions) of the loading platform 13. More specifically, the dimensional information may include the dimension Lx, the dimension Ly (see FIG. 2), and the dimension in the vehicle vertical direction Z (at least one of the dimension Lzb and the dimension Lzd) of the loading platform 13.

[Example A3] The dimensional information may include a capacity of the loading platform 13 calculated based on the dimensions of the loading platform 13. Specifically, the capacity of the loading platform 13 is the product of the dimension Lx, the dimension Ly (see FIG. 2), and the dimension Lzb of the loading platform 13.

[Example A4] The dimensional information may include information on the three-dimensional shape of the loading platform 13. More specifically, the dimensional information may include information on the three-dimensional shape of the entire portion (or approximately entire portion) of the loading platform 13. For example, the information about the three-dimensional shape about the loading platform 13 may include the dimension Lx, the dimension Ly (see FIG. 2), and the dimension Lzb. For example, the information about the three-dimensional shape of the loading platform 13 may include a height (a value obtained by subtracting the dimension Lzb from the dimension Lzd) from an intersection of the upper ends of the side panel surfaces 13c and the cab protector surface 13d to the upper end of the cab protector surface 13d. For example, the information about the three-dimensional shape of the loading platform 13 may include the dimension Lzd of the cab protector surface 13d in the vehicle vertical direction Z. The information about the three-dimensional shape of the loading platform 13 may include information about the angles of the respective surfaces (the tailgate surface 13b, the side panel surfaces 13c, etc.).

The dimensional information calculation unit 51 (see FIG. 4) calculates the dimensional information as follows, for example.

[Example B1] A specific example where the dimensional information calculation unit 51 calculates the three-dimensional shape of the loading platform 13 (see [Example A4] described above) is as follows.

[Example B1a] For example, the dimensional information calculation unit 51 illustrated in FIG. 4 calculates a three-dimensional shape based on a two-dimensional image and three-dimensional information. More specifically, the dimensional information calculation unit 51 includes a two-dimensional shape calculation unit 51a and a three-dimensional shape calculation unit 51b.

The two-dimensional shape calculation unit 51a calculates (estimates) the two-dimensional shape of the loading platform 13 (see FIG. 3) based on the two-dimensional image detected by the two-dimensional image detection unit 31. For example, the two-dimensional shape calculation unit 51a calculates the two-dimensional shape of the loading platform 13 with image recognition. Specifically, for example, the two-dimensional shape calculation unit 51a extracts (recognizes and estimates) feature points P (see FIG. 3) corresponding to the positions of the corners of the loading platform 13 in the two-dimensional image. In addition, the two-dimensional shape calculation unit 51a determines links L (see FIG. 3) corresponding to the sides of the loading platform 13 in the two-dimensional image. As illustrated in FIG. 3, the links L are line segments connecting the feature points P. For example, the two-dimensional shape calculation unit 51a illustrated in FIG. 4 executes software for extracting a specific shape from the two-dimensional image to determine the feature points P and the links L. For example, the software may be software using a deep learning technology or the like.

The three-dimensional shape calculation unit 51b calculates the three-dimensional shape of the loading platform 13. The three-dimensional shape calculation unit 51b calculates the three-dimensional shape of the loading platform 13 based on the two-dimensional shape of the loading platform 13, the two-dimensional shape being calculated by the two-dimensional shape calculation unit 51a and the three-dimensional information (for example, point cloud data) about the loading platform 13, the three-dimensional information being detected by the three-dimensional information detection unit 33. Specifically, for example, the three-dimensional shape calculation unit 51b specifies the positions of the corners and sides of the loading platform 13 in the three-dimensional information detected by the three-dimensional information detection unit 33 based on the positions (two-dimensional coordinates) of the feature points P and the links L in the two-dimensional image. Then, the three-dimensional shape calculation unit 51b acquires three-dimensional coordinates at the positions of the corners and sides of the loading platform 13 in the three-dimensional information (for example, point cloud data). As a result, the three-dimensional shape calculation unit 51b determines the three-dimensional coordinates of the corners and sides of the loading platform 13, and determines the three-dimensional shape of the loading platform 13.

[Example B1b] The dimensional information calculation unit 51 may calculate the three-dimensional shape of the loading platform 13 based on the three-dimensional information without using the two-dimensional image. Specifically, for example, the three-dimensional shape calculation unit 51b specifies (estimates and calculates) the three-dimensional positions of the respective surfaces of the loading platform 13 by clustering the three-dimensional information (for example, point cloud data) about the loading platform 13, the three-dimensional information being detected by the three-dimensional information detection unit 33. As a result, the three-dimensional shape calculation unit 51b determines the three-dimensional shape of the loading platform 13. In this example, the loading platform detection unit 30 may not include the two-dimensional image detection unit 31, and the dimensional information calculation unit 51 may not include the two-dimensional shape calculation unit 51a.

[Example B2] The dimensional information calculation unit 51 may calculate the dimensions and capacity (see above [Example A1], [Example A2], and [Example A3]) of the loading platform 13 based on the information about the three-dimensional shape of the loading platform 13, the three-dimensional shape information being calculated by the three-dimensional shape calculation unit 51b.

[Example B3] The dimensional information calculation unit 51 may calculate the dimensions and capacity (see above [Example A1], [Example A2], and [Example A3]) of the loading platform 13 without calculating the three-dimensional shape of the loading platform 13. In this example, the dimensional information calculation unit 51 may not include the two-dimensional shape calculation unit 51a and the three-dimensional shape calculation unit 51b.

[Example B3a] For example, the loading platform detection unit 30 illustrated in FIG. 1 detects the distance from the loading platform detection unit 30 to two facing surfaces of the loading platform 13. Then, the dimensional information calculation unit 51 (see FIG. 4) may calculate the dimension of the loading platform 13 in the direction where these two surfaces face each other, based on the detected distance. Specifically, for example, a distance in the vehicle front-rear direction X from the loading platform detection unit 30 to the tailgate surface 13b and a distance in the vehicle front-rear direction X from the loading platform detection unit 30 to the cab protector surface 13d are detected. Then, the dimensional information calculation unit 51 may calculate an interval between the cab protector surface 13d and the tailgate surface 13b in the vehicle front-rear direction X based on these distances, and calculate the dimension Lx of the loading platform 13 in the vehicle front-rear direction X (see [Example A1a] described above). Similarly, the dimensional information calculation unit 51 may calculate the dimension Ly (see [Example A1b] described above) of the loading platform 13 in the vehicle width direction Y based on the interval between the two side panel surfaces 13c, 13c illustrated in FIG. 2. In this example, the loading platform detection unit 30 may be a device that detects a one-dimensional or two-dimensional distance information. In this example, the loading platform detection unit 30 may not include the two-dimensional image detection unit 31 and the three-dimensional information detection unit 33 (also see [Example B3b] described below). In this example, the dimensional information calculation unit 51 may not include the two-dimensional shape calculation unit 51a and the three-dimensional shape calculation unit 51b (the same is applied to [Example B3b] described below).

[Example B3b] For example, the loading platform detection unit 30 illustrated in FIG. 1 detects the dimension of a partial surface of the loading platform 13 in a specific direction. The dimensional information calculation unit 51 may treat the dimension detected by the loading platform detection unit 30 as a part or entire part of the dimensional information about the loading platform 13. Specifically, for example, the loading platform detection unit 30 detects the height (dimension Lzd) of the cab protector surface 13d. The dimensional information calculation unit 51 may treat the dimension Lzd as a part or entire part of the dimensional information. In this example, the loading platform detection unit 30 may be a device that detects two-dimensional distance information.

The storage unit 53 (see FIG. 4) stores a correspondence between the dimensional information about the loading platform 13 and the type of the vehicle 10. The storage unit 53 stores this correspondence in advance (before the type of the vehicle 10 is determined).

[Example C1] For example, the correspondence stored in the storage unit 53 may be a relationship between a condition (for example, a numerical range) of the part or all of the dimensions (see [Example A1] and [Example A2] described above) of the loading platform 13 and the type of the vehicle 10. Specifically, for example, the correspondence stored in the storage unit 53 may be a relationship between a condition (for example, a numerical range) of the dimension Lx of the loading platform 13 and the type of the vehicle 10.

[Example C2] For example, the correspondence stored in the storage unit 53 may be a relationship between a condition (for example, a numerical range) of the capacity of the loading platform 13 (see [Example A3] described above) and the type of the vehicle 10 (see relationships R1 and R2 illustrated in FIG. 4). [Example C3] For example, the correspondence stored in the storage unit 53 may be a relationship between a condition of the information about the three-dimensional shape (for example, a dimensional ratio, an angle, and the like of each surface) of the loading platform 13 and the type of the vehicle 10.

The storage unit 53 may store information different from the correspondence between the dimensional information about the loading platform 13 and the type of the vehicle 10. For example, the storage unit 53 may store specification information (known information) for each model of the vehicle 10. The specification information may include information about the dimensions of the loading platform 13 and may include information about the shape of the loading platform 13.

The storage unit 53 may store information on whether the type of the vehicle 10 is a type scheduled to enter a work site where the work machine 20 performs work. The storage unit 53 may store the correspondence related to the type of the vehicle 10 scheduled to enter the work site where the work machine 20 performs work, and may not store correspondence related to the type of the vehicle 10 scheduled not to enter the work site.

The determination unit 55 determines the type of the vehicle 10 illustrated in FIG. 1 based on the dimensional information calculated by the dimensional information calculation unit 51 illustrated in FIG. 4 and the correspondence stored in storage unit 53. Specific examples of the "type" of the vehicle 10, the type being determined by the determination unit 55, are as follows.

[Example D1] The type determined by the determination unit 55 may be a category based on the size of the loading platform 13. [Example D1a] The type may be a category (class) based on a maximum loading amount of the loading platform 13. For example, the type may be a category including "4 t", "8 t", and "10 t" (see the relationship R1 illustrated in FIG. 4). Specifically, "4 t" is a category to which the vehicle 10 with the maximum loading amount of about 4 t on the loading platform 13 belongs, and means a "4 t dump", for example, in a case where the vehicle 10 is a dump truck. [Example D1b] The type may be a category based on the capacity of the loading platform 13. [Example D1c] Information on whether the vehicle 10 belongs to a category (class) scheduled to enter a work site where the work machine 20 performs work may be set in the storage unit 53. In this case, the determination unit 55 may determine the type based only on the category scheduled to enter the work site. The determination unit 55 may narrow candidates of the categories for the determination to categories scheduled to enter the work site.

Normally, when the category based on the size of the loading platform 13 (specifically, for example, the classes of "4 t", "8 t", and "10 t") are different from each other, the dimension Lx of the loading platform 13 in the vehicle front-rear direction X varies more easily than the dimensions of the loading platform 13 in other directions (for example, the dimension Ly and the like (see FIG. 2)). Therefore, in a case where the type determined by the determination unit 55 is a category based on the size of the loading platform 13, the dimensional information preferably includes the dimension Lx of the loading platform 13 in the vehicle front-rear direction X. For example, in a case where the type determined by the determination unit 55 is a category based on the size of the loading platform 13, the dimensional information may include only the dimension Lx of the loading platform 13 in the vehicle front-rear direction X.

[Usage Example 1] The controller 50 may use the category determination result based on the size of the loading platform 13 for acquiring an appropriate loading amount of a conveyance object onto the loading platform 13. The controller 50 may use the determination result of the category based on the size of the loading platform 13 for guidance on the loading amount in the loading work from the work machine 20 onto the loading platform 13.

[Example D2] The type determined by the determination unit 55 may be a model of the vehicle 10. "Model of vehicle 10" is a type to which the vehicles 10 manufactured with identical (or approximately identical) dimensions and shapes belong. [Example D2a] Information on whether a model is scheduled to enter a work site where the work machine 20 performs work may be set in the storage unit 53. In this case, the determination unit 55 may determine the model based only on the model scheduled to enter the work site. The determination unit 55 may narrow candidates of models to be determined to models scheduled to enter the work site.

[Usage Example 2] The controller 50 may read specification information (specification information about the loading platform 13) about the model stored in the storage unit 53, based on the determination result of the model of the vehicle 10. [Usage Example 2a] The controller 50 may use the specification information about the loading platform 13 for acquiring an appropriate loading amount of a conveyance object onto the loading platform 13. [Usage Example 2b] The controller 50 may use the specification information about the loading platform 13 for guidance on an appropriate amount of loading a conveyance object from the work machine 20 onto the loading platform 13. [Usage Example 2c] The controller 50 may use the specification information about the loading platform 13 for acquiring a detailed position of the loading platform 13. [Usage Example 2c-1] In this case, the controller 50 may use the detailed position information about the loading platform 13 for an automatic operation for loading a conveyance object from the work machine 20 onto the loading platform 13. For example, the controller 50 may use the information on the detailed position of the loading platform 13 for specifying a loading position (for example, a soil discharging position) of the conveyance object from the work machine 20 to the loading platform 13. [Usage Example 2c-2] The controller 50 may use the detailed position information about the loading platform 13 for assisting the operation for loading a conveyance object from the work machine 20 onto the loading platform 13. [Usage Example 2c-3] The controller 50 may use the detailed position information about the loading platform 13 for controlling prevention of collision between the loading platform 13 and the work machine 20.

The determination unit 55 does not necessarily determine only one type. The determination unit 55 may narrow down the type candidates stored in the storage unit 53 to a plurality of types.

The determination unit 55 may determine a type based on all pieces of information included in the dimension information, or may determine a type based on only some pieces of information (information necessary for determining a type) included in the dimension information.

The detectability determination unit 57 (see FIG. 4) determines whether the loading platform 13 can be detected by the loading platform detection unit 30. As a result, the detectability determination unit 57 determines whether the dimensional information calculation unit 51 can appropriately calculate the dimensional information about the loading platform 13, and determines whether the determination unit 55 can appropriately determine the type of the vehicle 10. The information necessary for the determination by the detectability determination unit 57 differs depending on whether the loading platform detection unit 30 is attached to the work machine 20.

[Example E1] In a case where the loading platform detection unit 30 is attached to the work machine 20, the detectability determination unit 57 makes a determination as follows. The detectability determination unit 57 determines whether the attitude of the work machine 20 is a "loading platform detectable attitude". The loading platform detectable attitude is an attitude of the work machine 20 at which the loading platform 13 can be detected by the loading platform detection unit 30. More specifically, the loading platform detectable attitude is an attitude of the work machine 20 such that the loading platform detection unit 30 can detect information necessary for the dimensional information calculation unit 51 to appropriately calculate the dimensional information about the loading platform 13. The loading platform detectable attitude is set in the controller 50. Specifically, for example, the loading platform detectable attitude is an attitude at which the ratio of the attachment 25 appearing in the detection area (angle of view) of the loading platform detection unit 30 illustrated in FIG. 3 is a predetermined value or less. For example, the loading platform detectable attitude may be an attitude at which the attachment 25 does not appear in the detection area of the loading platform detection unit 30 (the "predetermined value" may be 0). For example, an attitude at which the ratio of the attachment 25 appearing in the detection area of the loading platform detection unit 30 exceeds the predetermined value does not correspond to the loading platform detectable attitude.

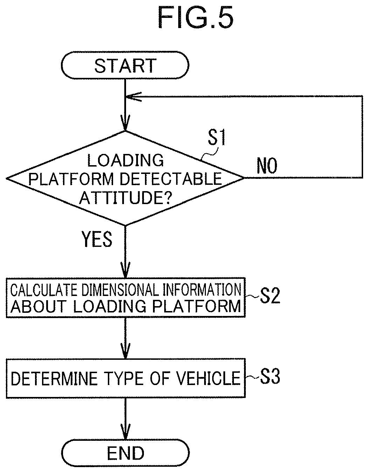

In this [Example E1], in a case where the attitude detected by the attitude detection unit 41 is the loading platform detectable attitude (YES in step S1 in FIG. 5), the dimensional information calculation unit 51 calculates dimensional information about the loading platform 13 (step S2 in FIG. 5). In this case, the determination unit 55 determines the type of vehicle 10 (step S3 in FIG. 5). On the other hand, in a case where the attitude detected by the attitude detection unit 41 is not the loading platform detectable attitude (NO in step S1 in FIG. 5), the dimensional information calculation unit 51 does not calculate the dimensional information about the loading platform 13. In this case, the determination unit 55 does not determine the type of the vehicle 10.

[Example E2] In a case where the loading platform detection unit 30 is disposed outside the work machine 20 (see the loading platform detection unit 30 indicated by a double-dashed line in FIG. 1), the detectability determination unit 57 makes a determination as follows. The detectability determination unit 57 determines whether a "loading platform detectable condition" is satisfied. The loading platform detectable condition is a condition related to the attitude and position of the work machine 20 capable of detecting the loading platform 13 with the loading platform detection unit 30. More specifically, the loading platform detectable condition is a condition related to the attitude and position of the work machine 20 such that the loading platform detection unit 30 can detect information necessary for the dimensional information calculation unit 51 to appropriately calculate the dimensional information about the loading platform 13. The loading platform detectable condition is set in the controller 50. Specifically, for example, the loading platform detectable condition is a condition related to the attitude and position of the work machine 20 such that the ratio of the work machine 20 appearing in the detection area of the loading platform detection unit 30 is a predetermined value or less. For example, the loading platform detectable condition may be a condition related to the attitude and position of the work machine 20 such that the work machine 20 does not appear in the detection area of the loading platform detection unit 30 (the "predetermined value" may be 0). For example, the attitude and position of the work machine 20 such that the work machine 20 appearing in the detection area of the loading platform detection unit 30 exceeds the predetermined value do not satisfy the loading platform detectable condition.

In this [Example E2], in a case where the attitude detected by the attitude detection unit 41 and the position detected by the position detection unit 43 satisfy the loading platform detectable condition, the dimensional information calculation unit 51 calculates the dimensional information about the loading platform 13. In this case, the determination unit 55 determines the type of the vehicle 10. On other hand, in a case where the attitude detected by the attitude detection unit 41 and the position detected by the position detection unit 43 do not satisfy the loading platform detectable condition, the dimensional information calculation unit 51 does not calculate the dimensional information about the loading platform 13. In this case, the determination unit 55 does not determine the type of the vehicle 10.

### (Effects of First Invention)

An effect of the vehicle determination system 1 illustrated in FIG. 1 is as follows. The vehicle determination system 1 determines a type of the vehicle 10 having the loading platform 13. As illustrated in FIG. 4, the vehicle determination system 1 includes the loading platform detection unit 30, the dimensional information calculation unit 51, the storage unit 53, and the determination unit 55.

[Configuration 1] The loading platform detection unit 30 detects information including a distance to the loading platform 13 (a distance from the loading platform detection unit 30 to the loading platform 13). The dimensional information calculation unit 51 calculates dimensional information about the loading platform 13 based on the distance detected by the loading platform detection unit 30. The storage unit 53 stores the correspondence between the dimensional information about the loading platform 13 and the type of the vehicle 10. The determination unit 55 determines the type of the vehicle 10 based on the dimensional information calculated by the dimensional information calculation unit 51 and the correspondence stored in storage unit 53.

In [Configuration 1] described above, the dimensional information about the loading platform 13 is calculated based on the distance from the loading platform detection unit 30 to the loading platform 13 illustrated in FIG. 1. Then, the type of the vehicle 10 is determined based on the dimensional information. Therefore, the type of the vehicle 10 can be determined without providing a mark for determining the type of the vehicle 10 to the vehicle 10. As a result, time and effort required for work of providing a mark or the like to the vehicle 10 can be saved. Further, it is possible to save the time and effort of setting a mark in accordance with a type of the vehicle 10 (for example, setting of a light emission pattern, a color, and the like of the mark).

### (Effects of Second Invention)

[Configuration 2] The "dimensional information" (see the above [Configuration 1]) includes the dimension Lx of the loading platform 13 in a longitudinal direction (vehicle front-rear direction X) of the loading platform 13.

The following effects can be obtained by [Configuration 2] described above. Normally, the dimension Lx of the loading platform 13 in the vehicle front-rear direction X differs greatly depending on a type of the vehicle 10 as compared with the dimension Ly of the loading platform 13 in the vehicle width direction Y (see FIG. 2), and the dimension Lzb and the dimension Lzd of the loading platform 13 in the vehicle vertical direction Z. In [Configuration 2] described above, since the dimension Lx of the loading platform 13 in the vehicle front-rear direction X is included in the dimensional information, the vehicle determination system 1 can appropriately determine the type of the vehicle 10.

### (Effects of Third Invention)

[Configuration 3] The "dimensional information" (see [Configuration 1] above) includes information about the three-dimensional shape of the loading platform 13.

According to [Configuration 3] described above, the information amount of the dimensional information can be made greater than in the case where the dimensional information does not include the three-dimensional shape information about the loading platform 13 (for example, in a case where the dimensional information includes only a dimension of the loading platform 13 in a specific direction). As a result, the vehicle determination system 1 can accurately determine the type of the vehicle 10.

### (Effects of Fourth Invention)

For example, the loading platform detection unit 30 includes the two-dimensional image detection unit 31 and the three-dimensional information detection unit 33. The two-dimensional image detection unit 31 detects a two-dimensional image of the loading platform 13. The three-dimensional information detection unit 33 detects three-dimensional information about the loading platform 13. As illustrated in FIG. 4, the dimensional information calculation unit 51 includes the two-dimensional shape calculation unit 51a and the three-dimensional shape calculation unit 51b.

[Configuration 4] The two-dimensional shape calculation unit 51a calculates the two-dimensional shape of the loading platform 13 based on the two-dimensional image detected by the two-dimensional image detection unit 31. The three-dimensional shape calculation unit 51b calculates the three-dimensional shape of the loading platform 13 based on the two-dimensional shape of the loading platform 13, the two-dimensional shape being calculated by the two-dimensional shape calculation unit 51a, and the three-dimensional information about the loading platform 13, the three-dimensional information being detected by the three-dimensional information detection unit 33.

According to [Configuration 4] described above, the three-dimensional shape of the loading platform 13 illustrated in FIG. 1 is calculated by combining the two-dimensional image and the three-dimensional information. As a result, the three-dimensional shape can be calculated more accurately than in a case where the three-dimensional shape is calculated only based on the three-dimensional information. As a result, the vehicle determination system 1 can accurately determine the type of the vehicle 10.

### (Effects of Fifth Invention)

[Configuration 5] The "type of the vehicle 10 " (see [Configuration 1] described above) is a category based on the size of the loading platform 13.

According to [Configuration 5] described above, the determination result of the type of the vehicle 10 can be used for a function that requires information on the size of the loading platform 13. Specifically, for example, the determination result of the type of the vehicle 10 may be used for acquiring the appropriate loading amount of a conveyance object onto the loading platform 13, guidance on the loading amount of the conveyance object onto the loading platform 13, and the like.

### (Effects of Sixth Invention)

[Configuration 6] The "type of the vehicle 10 " (see [Configuration 1] described above) is a model of the vehicle 10.

According to [Configuration 6] described above, the determination result of the type of the vehicle 10 can be used for a function that requires information on the model of the vehicle 10. Specifically, for example, the determination result of the type of the vehicle 10 may be used for reading specification information corresponding to the determined model of the vehicle 10. In a case where the specification information about the vehicle 10 is read, the specification information may be used for accurate acquisition of the position of the loading platform 13, automatic operation and assistance of the work of loading onto the loading platform 13, control of prevention of collision between the loading platform 13 and the work machine 20, and the like.

### (Effects of Seventh Invention)

The vehicle determination system 1 includes the attitude detection unit 41. The attitude detection unit 41 detects the attitude of the work machine 20 that performs work on the vehicle 10. The loading platform detection unit 30 is attached to the work machine 20.

[Configuration 7] The determination unit 55 determines the type of the vehicle 10 in a case where the attitude detected by the attitude detection unit 41 is the loading platform detectable attitude. The loading platform detectable attitude is an attitude at which the loading platform 13 can be detected by the loading platform detection unit 30. The determination unit 55 does not determine the type of the vehicle 10 in a case where the attitude detected by the attitude detection unit 41 is not the loading platform detectable attitude.

According to [Configuration 7] described above, the type of the vehicle 10 can be determined in a state where the loading platform 13 is appropriately detected by the loading platform detection unit 30. Therefore, the vehicle determination system 1 can accurately determine the type of the vehicle 10.

### (Effects of Eighth Invention)

The vehicle determination system 1 includes the attitude detection unit 41 and the position detection unit 43. The attitude detection unit 41 detects the attitude of the work machine 20 that performs work on the vehicle 10. The position detection unit 43 detects the position of the work machine 20 at the work site where the work machine 20 is disposed. The loading platform detection unit 30 is attached outside the work machine 20.

[Configuration 8] The determination unit 55 illustrated in FIG. 4 determines the type of the vehicle 10 in a case where the attitude detected by the attitude detection unit 41 and the position detected by the position detection unit 43 satisfy the loading platform detectable condition. The loading platform detectable condition is a condition set as a condition under which the loading platform 13 can be detected by the loading platform detection unit 30 illustrated in FIG. 1. The determination unit 55 illustrated in FIG. 4 does not determine the type of the vehicle 10 illustrated in FIG. 1 in a case where the attitude detected by the attitude detection unit 41 and the position detected by the position detection unit 43 do not satisfy the loading platform detectable condition.

According to [Configuration 8] described above, the type of the vehicle 10 can be determined in a state where the loading platform 13 is appropriately detected by the loading platform detection unit 30. Therefore, the vehicle determination system 1 can accurately determine the type of the vehicle 10.

### (Modifications)

The above embodiment may be variously modified. For example, the connection illustrated in FIG. 4 between the components of the above embodiment may be changed. For example, a value, a range, or the like (for example, a condition or the like of the correspondence stored in the storage unit 53) may be constant, may be changed by manual operation, or may be automatically changed according to a certain condition. For example, the number of the components may be changed, and some of the components do not have to be provided. For example, the components may be fixed or connected directly or indirectly. For example, a plurality of members and parts different from each other may be described as one member and part. For example, what has been described as one member and part may be provided separately in a plurality of different members and parts. Specifically, for example, the components (the dimensional information calculation unit 51, the storage unit 53, and the determination unit 55) of the controller 50 may be disposed at one place or may be distributed and disposed at a plurality of places. For example, the components each may have only some of features (function, arrangement, shape, manufacturing method, operation, and the like).

## Claims

1. A vehicle determination system that determines a type of a vehicle having a loading platform, the vehicle determination system comprising:
a loading platform detection unit that detects information including a distance to the loading platform; and
a controller,
wherein the controller
calculates dimensional information about the loading platform based on the distance detected by the loading platform detection unit,
stores a correspondence between the dimensional information about the loading platform and a type of the vehicle, and
determines the type of the vehicle based on the calculated dimensional information and the stored correspondence.

2. The vehicle determination system according to claim 1, wherein the dimensional information includes a dimension of the loading platform in a longitudinal direction of the loading platform.

3. The vehicle determination system according to claim 1 or 2, wherein the dimensional information includes information about a three-dimensional shape of the loading platform.

4. The vehicle determination system according to claim 3, wherein
the loading platform detection unit includes
a two-dimensional image detection unit that detects a two-dimensional image of the loading platform; and
a three-dimensional information detection unit that detects three-dimensional information about the loading platform, and
wherein the controller
calculates a two-dimensional shape of the loading platform based on the two-dimensional image detected by the two-dimensional image detection unit, and
calculates the three-dimensional shape of the loading platform based on the calculated two-dimensional shape of the loading platform and the three-dimensional information about the loading platform, the three-dimensional information being detected by the three-dimensional information detection unit.

5. The vehicle determination system according to any one of claims 1 to 4, wherein the type of the vehicle is a category based on a size of the loading platform.

6. The vehicle determination system according to any one of claims 1 to 5, wherein the type of the vehicle is a model of the vehicle.

7. The vehicle determination system according to any one of claims 1 to 6, further comprising
an attitude detection unit that detects an attitude of a work machine that performs work on the vehicle,
wherein the loading platform detection unit is attached to the work machine,
wherein the controller determines the type of the vehicle in a case where the attitude detected by the attitude detection unit is a loading platform detectable attitude set as an attitude at which the loading platform is detectable by the loading platform detection unit, and
wherein the controller does not determine the type of the vehicle in a case where the attitude detected by the attitude detection unit is not the loading platform detectable attitude.

8. The vehicle determination system according to any one of claims 1 to 6, further comprising:
an attitude detection unit that detects an attitude of a work machine that performs work on the vehicle; and
a position detection unit that detects a position of the work machine at a work site where the work machine is disposed,
wherein the loading platform detection unit is disposed outside the work machine,
wherein the controller determines the type of the vehicle in a case where the attitude detected by the attitude detection unit and the position detected by the position detection unit satisfy a loading platform detectable condition set as a condition under which the loading platform is detectable by the loading platform detection unit, and
wherein the controller does not determine the type of the vehicle in a case where the attitude detected by the attitude detection unit and the position detected by the position detection unit do not satisfy the loading platform detectable condition.
